# EUROPÄISCHE PATENTSCHRIFT

(11) **EP 1 897 431 B1**
(45) Veröffentlichungstag und Bekanntmachung des Hinweises auf die Patenterteilung: **11.02.2009**
(21) Anmeldenummer: 07011127.3
(22) Anmeldetag: 06.06.2007
(51) Int. Cl.: A01F 12/30

(54) **Schüttlerhilfe und Hordenschüttler**
Shaker aid and over shaker
Aide de secoueur et secoueur de galettes

(30) Priorität: 05.09.2006 DE 102006041632
(43) Veröffentlichungstag der Anmeldung: 12.03.2008
(73) Patentinhaber: AB. Agri-Broker e.K., 42699 Solingen (DE)
(72) Erfinder: Schmidt, Uwe, 99867 Gotha (DE); Wollesen, Jörg, 42699 Solingen (DE)
(74) Vertreter: Vomberg, Friedhelm

(56) Entgegenhaltungen:
- DE-A1- 2 741 298
- DE-A1- 3 441 238
- DE-B- 1 155 627
- DE-C- 176 673

## Beschreibung

Die Erfindung betriffft eine Schüttlerhilfe für einen Schüttler-Mähdrescher mit nebeneinander liegenden, mehrstufigen Horden sowie einen Hordenschüttler eines Schüttler-Mähdreschers mit an mindestens einer Kante und im Bereich einer Fallstufe angeordneter erfindungsgemäßer Schüttlerhilfe.

Zum Aufreißen der Gutschicht werden bei einem modernen Hochleistungs-Mähdrescher in der Regel nebeneinander liegende, mehrstufige Schüttler, so genannte Horden, eingesetzt, über die der aufgenommene Emtegutstrom hinweggeführt und nach Abscheidung der Körner oder Samen schließlich als Strohmatte hinausbefördert wird. Dabei enthält die abgeworfene Strohmatte oftmals noch Restkömer. Um den Austrag an Erntegutresten zu reduzieren, werden daher Schüttlerhilfen eingesetzt, die mit den Horden zusammenarbeiten und eine verbesserte Abscheidung der Körner oder Samen bewirken sollen.

Aus dem Stand der Technik sind u. a. oberhalb der Horden angeordnete, rotierende Schüttlerhilfen bekannt, deren Aufgabe aber im Wesentlichen darin besteht, den Weitertransport des Emtegutstroms über die mehrstufigen Horden zu gewährleisten. Ein Beispiel einer derartigen Förderhilfe geht aus der DE 199 20 538 A1 hervor.

Ebenfalls bekannt - und vornehmlich zur Verbesserung der Komabscheidung eingesetzt - sind Schüttlerhilfen, die im Bereich zumindest einer Fallstufe einer Horde angeordnet sind und aus einer sich in Längsrichtung der Horde, d.h. in Förderrichtung des Emtegutstromes, erstreckende Gestängeanordnung bestehen. Der über eine Horde transportierte Emtegutstrom muss somit zusätzlich die Gestängeanordnung passieren, wobei das Gestänge derart bewegt wird bzw. sich derart bewegt, dass die Gutschicht aufgelockert und die Komabscheidung verbessert wird. Diesen Vorgang bezeichnet man auch allgemein als "Worfeln".

Einen mit zusätzlichen Schüttelelementen als Schüttlerhilfen zusammenarbeitenden Hordenschüttler für Mähdrescher beschreibt die DE 81 00 584 U1. Zumindest im Bereich einer Stufenkante einer jeden Schüttlerhorde sind Schüttelelemente befestigt, die aus mehreren mit Abstand zueinander verlaufenden Profilen bestehen. Dabei sind die Profile einendig auf einer gemeinsamen Halteleiste befestigt, die im Bereich der Stufenkante der Schüttlerhorde beweglich gehalten ist. Durch die Bewegungen des Schüttlers werden die Profile in Schwingung versetzt, wodurch ein separater Antrieb der Schüttlerhilfe entbehrlich sein soll. Um die Schwingungen der Profile in Grenzen zu halten, wird empfohlen, die Halteleiste mittels Gummifedern mit der Schüttlerhorde zu verbinden.

Als nachteilig wirkt sich jedoch bei dem beschriebenen Hordenschüttler der hohe Aufwand im Hinblick auf die Fertigung der einzelnen Elemente sowie deren Montage aus. Als alternative Ausführungsform sieht die DE 81 00 584 U1 daher die Befestigung von mindestens zwei Gummisträngen als Schüttelelemente an einer Schüttlerhorde vor, die derart befestigt sind, dass sie in Richtung von ihren freien Enden auf ihre Befestigungspunkte hin betrachtet aufeinander zulaufen. Neben der Vermeidung der vorgenannten Nachteile soll bei dieser Ausführungsform zudem eine verbesserte Lockerung der Strohmatte dadurch erzielt werden, dass die Gummistränge aufgrund ihrer V-förmigen Anordnung nicht nur eine auf und ab, sondern auch eine seitliche Bewegung vollführen und dadurch die Strohmatte seitlich auseinander ziehen. Um den Schwingungsbelastungen standzuhalten und ein Abknicken zu verhindern, müssen die Gummistränge jedoch einen hohen Querschnitt aufweisen, was sich wiederum negativ auf die Schwingungseigenschaft der Gummistränge auswirkt.

Die DE 34 41 238 A1 beschreibt eine Vorrichtung zur Intensivierung der Körnerabscheidung an Strohschüttlern von Mähdreschern, die im Bereich mindestens einer Fallstufe der Schüttlerhorden angeordnet ist und die aus schwingfähigen Lockerungsstäben ohne separaten Antrieb besteht und die das auf den Strohschüttlern befindliche Erntegut neben der Schüttlerwirkung einer zusätzlichen Auflockerung unterzieht. An einer mit der Stufenwand einer Fallstufe verbundenen Platte ist ein federnder Lockerungsstab asymmetrisch und längs und quer zur Längsachse der Schüttlerhorde schwingbeweglich befestigt. Der Schwingbereich des Lockerungsstabes erstreckt sich in der Längsrichtung der Schüttlerhorde und verläuft oberhalb des Trennspaltes zwischen jeweils zwei benachbarten Schüttlerhorden mit Abstand zum Schüttlerbelag. Der Lockerungsstab besteht in seinem Befestigungsbereich aus einem vertikal aus einem dazu rechtwinklig abgebogenen, horizontal verlaufenden Teilstück, das über Schellen schwenkbeweglich mit der genannten Platte verbunden ist, während das horizontale Teilstück in seinem Endbereich frei beweglich über eine Gummibuchse und einen schraubbar angebrachten Bügel an der Platte befestigt ist.

Aufgabe der vorliegenden Erfindung ist daher die Weiterentwicklung einer vorstehend beschriebenen Schüttlerhilfe im Hinblick auf einen verbesserten Wirkungsgrad, d.h. eine verbesserte Restkomabscheidung, bei einer gleichzeitig vereinfachten aber robusten Ausführung.

Diese Aufgabe wird gelöst durch eine Schüttlerhilfe mit den Merkmalen nach Anspruch 1. Konkrete Ausführungsformen der Erfindung werden in den Unteransprüchen beschrieben.

Die erfindungsgemäße Schüttlerhilfe ist dadurch gekennzeichnet, daß mindestens ein, vorzugsweise mehrere, Zinken starr am Trägerblech oder Trägerrahmen befestigt sind und daß der oder die Zinken ausschließlich sich in einer vertikalen Ebene erstreckend angeordnet sind und eine über das Trägerblech bzw. den Trägerrahmen überstehende Länge von mindestens 20 cm, vorzugsweise 30 bis 45 cm, besitzen und gegenüber der Trägerblech- bzw. Trägerrahmenebene um 15° bis 30° nach oben geneigt sind.

Die Anordnung der Zinken an einem Trägerblech oder einem Trägerrahmen ermöglicht eine einfache Montage der Schüttlerhilfe an einem Hordenschüttler.

Des Weiteren führt die erfindungsgemäße Neigung der Zinken zu einer gründlicheren Auflockerung und damit einer effektiveren Kornabscheidung durch die oszillierenden und dabei den Gutstrom durchdringenden Zinken. Um erntegutspezifische und die Gutseparation beeinflussende Parameter wie Erntegutart, Erntereifgrad, Erntefeuchte und dergleichen berücksichtigen zu können, wird ein Anstellwinkel zwischen 15° und 30° gewählt, der ggf. einstellbar sein kann. Ebenso können auf diese Weise maschinenspezifische Parameter wie Transportgeschwindigkeit, Schüttlerbewegungsintensität und dergleichen Berücksichtigung finden.

Bevorzugt besitzt die Schüttlerhilfe mehr als einen Zinken, um das Gewicht der darüber auflastend gleitenden Strohmatte auf mehrere Zinken zu verteilen. Dabei weisen zwei benachbarte Zinken mindestens einen Abstand von 5 cm auf, vorzugsweise einen Abstand von 7 bis 10 cm, da ein zu geringer Abstand das Eindringen der oszillierenden Zinken in den Gutstrom erschweren und damit gegebenenfalls zu dem gegenteiligen Effekt, nämlich einer Verdichtung des Gutstroms führen würde. Bei der Bestimmung des Abstandes können ebenfalls die oben genannten erntegut- und/oder maschinenspezifischen Parameter berücksichtigt werden.

Weiterhin bevorzugt beträgt der Zinkendurchmesser bei einer Zinkenlänge von mehr als 20 cm mindestens 5 mm. Der Zinkendurchmesser hängt u. a. von der Anzahl der Zinken ab. Es versteht sich von selbst, dass bei nur einem Zinken der Zinkenquerschnitt entsprechend verstärkt werden muss, um der Belastung durch die Strohmatte Stand zu halten, insbesondere, wenn aufgrund eines nass-feuchten Wetters die Strohmatte einen hohen Gehalt an Feuchtigkeit aufweist. Mit der Querschnittsverstärkung verändern sich allerdings auch die Schwingungseigenschaften eines Zinkens. Der Zinkendurchmesser sollte daher möglichst gering gewählt werden. Andererseits ist er so ausreichend zu bemessen, dass keine Gefahr eines Schwingungsbruchs besteht, da abbrechende und herabfallende Teile den Hordenschüttler erheblich beschädigen können.

Als Werkstoff für die Zinken wird Edelstahl bevorzugt. Neben einer hohen Korrosionsbeständigkeit zeichnet sich Edelstahl durch eine hohe Erosions- und Abrasionsbeständigkeit aus. Selbst starken Gleit- und Reibebeanspruchungen durch Körner oder im Erntegut mitgeführten Steinen oder Sanden widersteht der Werkstoff viele Jahre. Da weder durch Abrieb, noch durch Migration Edelstahl in nennenswertem Umfang Stoffe an die zu verarbeitenden oder zu transportierenden Medien abgibt, hat er sich gerade im Lebensmittelbereich bewährt.

Weiterhin bevorzugt bestehen die Zinken aus Federstahl, der bekanntermaßen hervorragende Schwingungseigenschaften aufweist.

Die Befestigung der Zinken an dem Trägerblech bzw. Trägerrahmen erfolgt über eine Löt- bzw. Schweiß-, Klemm-, Steck- oder Schraubverbindung. Diese Verbindung ist starr, d.h. eine Bewegung des Trägerblechs oder des Trägerrahmens wird auf die Zinken übertragen, wobei das jeweils freie Ende eines Zinkens zu schwingen bzw. zu oszillieren beginnt. Zinkenquerschnitt, -länge und -werkstoff sowie Befestigung am Trägerblech bzw. -rahmen sind bevorzugt derart gewählt, dass der Zinken bei Anregung sehr stark oszilliert. Auf die Anordnung von Gummilagem bei der Befestigung wird bewusst verzichtet, da diese einen dämpfenden Effekt haben und eine starke Oszillation unterbinden würden.

Nach einer bevorzugten Ausführungsform besteht das Trägerblech bzw. der Trägerrahmen ganz oder teilweise aus einem U-Profil, da dieses eine hohe Steifigkeit aufweist. Unterstützend kann das Trägerblech auch eine Abstützleiste oder Abstützrahmen aufweisen, die an der Vertikalfläche der Stufenkante einer Horde montiert ist. Über die Befestigung der Zinken an dem Trägerblech bzw. -rahmen werden Hebelkräfte auf das Trägerblech bzw. den -rahmen übertragen, die zu Verbiegungen desselben führen könnten. Durch die Wahl eines geeigneten Profils oder die Anordnung einer Abstützleiste oder eines Abstützrahmens können diese jedoch vermieden werden. Unterstützend kann einer Weiterbildung entsprechend an dem Trägerblech bzw. Trägerrahmen Zusätzlich mindestens eine Stützlasche angeordnet sein.

Das Trägerblech kann auch derart geformt sein, dass es gleichzeitig als Abstützrahmen dient. Hierzu werden von einer rückseitigen vertikalen Fläche seitlich Stützlaschen abgekantet auf denen oberseitig eine wiederum abgekantete, im Wesentlichen horizontale Fläche ruht, an deren Unterseite die Zinken befestigt werden können. Darüber hinaus kann die oberseitig liegende Fläche erneut abgekantet sein, so dass sie einen kurzen nach unten weisenden und mit Bohrungen versehenen Schenkel aufweist, durch welche die Zinken hindurch gesteckt werden.

Nach einer weiteren Ausführungsform kann das Trägerblech zur Aufnahme wenigstens eines Zinkens auch als mehrfach abgewinkeltes Profil ausgebildet sein, wobei ein senkrecht stehender Schenkel zur Befestigung an der Vertikalfläche der Stufenkante einer Horde und ein waagerecht liegender Schenkel der Befestigung des Trägerblechs an der überstehenden Bördelkante dient. Zwischen diesen beiden Schenkeln besitzt das Profil einen Teilbereich, der in einem Winkel zwischen 15° und 30° in Bezug auf den waagerechten Schenkel geneigt angeordnet ist und an dem der Zinken bzw. die Zinken befestigt werden. Der geneigte Teilbereich des Trägerblechprofils gibt dabei den Anstellwinkel des Zinkens bzw. der Zinken vor. Die Befestigung der Zinken kann beispielsweise über eine oder mehrere Blechlaschen erfolgen, die derart über die Zinken gelegt werden, dass sie seitlich überstehen und an ihren überstehenden Seiten mit dem Trägerblech verschraubt werden können. Um die Zinken auf die Höhe der Stufenkante der Horde zu führen, können sie ebenfalls abgewinkelt ausgeführt sein, vorzugsweise zumindest teilweise dem Profilverlauf des Trägerblechs folgend, wobei der frei vor der Stufenkante schwingende Teil wieder die Lage in dem gewünschten Anstellwinkel einnimmt. Sofern das Trägerblech der Aufnahme eines einzelnen Zinkens dient, können mehrere Trägerbleche entsprechend der gewünschten Anzahl an Zinken nebeneinander an der Stufenkante der Horde angebracht werden.

Eine weitere bevorzugte Ausführungsform sieht einen Trägerrahmen bestehend aus wenigstens einer Leiste vor. Die Leiste weist Bohrungen mit kreisrundem Querschnitt auf, deren Durchmesser im Wesentlichen dem Außendurchmesser der Zinken entspricht. Zur Halterung der Zinken werden deren Enden durch die Bohrungen gesteckt. Die Bohrungen sind zudem bevorzugt schräg geführt, das heißt in einem Winkel zwischen 15° und 30° zur Trägerrahmenebene, um den gewünschten Anstellwinkel der Zinken zu erreichen. Die Zinken selbst können demzufolge gerade ausgeführt sein. Nach Aufnahme der Zinken wird die Leiste unter die Bördelkante einer Fallstufe gesetzt und mit der Bördelkante verschraubt. Auch hier kann die Kombination mit zusätzlichen Abstützelementen, die an der Vertikalfläche der Stufenkante der Horde befestigt werden und zumindest teilweise die Leiste von unten her abstützen, von Vorteil sein.

Nach einer Weiterbildung der vorstehenden Ausführungsform weist die Leiste rückseitig seitlich geführte Ausnehmungen auf, die in Verbindung mit den Bohrungen stehen und das Einlegen eines abgewinkelten Endbereiches eines Zinkens erlauben. Entsprechend weist der Zinken bevorzugt einen kurzen abgewinkelten Endbereich auf, der in der Ausnehmung zu liegen kommt und auf diese Weise ein Herausrutschen des Zinkens aus der Bohrung verhindert.

Eine weitere bevorzugte Ausführungsform sieht einen Trägerrahmen bestehend aus zwei Leisten bzw. Backen vor, zwischen denen die Zinken eingeklemmt werden. Bevor zugt weisen beide Backen, nämlich Oberteil und Unterteil, halbkreisförmige Ausnehmungen auf, in denen die Enden der Zinken eingelegt werden.

Gegenüber einer beispielsweise geschweißten Verbindung der Zinken mit dem Trägerblech oder Trägerrahmen hat die klemmende Halterung den Vorteil, dass die Schwingungsbelastung im Verbindungsbereich weniger groß ist, da sie von den Backen aufgenommen wird. Die Verbindung ist somit haltbarer und verringert demzufolge die Gefahr, dass sich die Zinken aufgrund der andauernden Schwingungsbelastungen lösen bzw. dass die Zinken abbrechen und Teile des Mähdreschers beschädigen.

Eine Weiterbildung sieht vor, dass die Zinken wiederum abgewinkelte Endbereiche aufweisen und die untere Backe halbkreisförmige Ausnehmungen besitzt, die in demselben Winkel in kreisförmige Bohrungen auslaufen, so dass die abgewinkelten Endbereiche der Zinken beim Einlegen durch die Bohrungen der Backe geführt werden können. Die Bohrungen sind vorzugsweise senkrecht zur Backe bzw. zur Trägerrahmenebene angeordnet. Bei einer bevorzugten Neigung der Zinken von etwa 15° bis 30° gegenüber der Trägerrahmenebene schließen Zinken und abgewinkelter Endbereich einen Winkel von etwa 105° bis 120° ein. Das abgewinkelte Ende verhindert, dass der Zinken herausrutschen kann, sollte die Klemmkraft im Laufe der Zeit nachlassen und sich die Klemmverbindung daher lockern.

Weiterhin bevorzugt bestehen die Backen aus Aluminium oder einem verschleißarmen Hartkunststoff. Die Materialfestigkeit der Backen ist bevorzugt geringer zu wählen als die der Zinken, welche mindestens 800 N/mm². vorzugsweise etwa 1400 N/mm² beträgt. Verschleißerscheinungen an den Backen, insbesondere Aufweitungen im Bereich der Zinkenaufnahmen aufgrund der von den Zinken auf die Backen übertragenen Schwingungen, werden hingenommen. Gegebenenfalls sind die Backen nach einiger Zeit auszutauschen. Sollte der entsprechende Zeitpunkt zum Austausch der Backen versäumt werden, verhindern die abgewinkelten und durch die Bohrungen der Backen gesteckten Endbereiche der Zinken, dass die Zinken herausrutschen.

Backenober- und Backenunterteil werden nach Einlegen der Zinken miteinander verschraubt. Zur Befestigung der Schüttlerhilfe an der Vertikalfläche der Stufenkante einer Horde wird vorzugsweise das Backenpaket unter die Bördelkante gesetzt und von unten mittels eines L-förmigen Stützprofils gekontert. Die Schrauben, die Backenober- und Backenunterteil verbinden, können auch zur Verbindung der Backen mit der Bördelkante und/oder dem L-förmigen Stützprofil eingesetzt werden. Darüber hinaus können aber auch weitere Schrauben vorgesehen sein. Das L-förmige Stützprofil wird ebenfalls mittels Schrauben an der Vertikalfläche der Hordenstufe befestigt. Zur Aussteifung kann das Stützprofil zudem Stützlaschen aufweisen.

Indem sämtliche Verbindungen bevorzugt über Schraubverbindungen hergestellt werden, ist das Nachrüsten von Mähdreschern ohne Schüttlerhilfe oder der Austausch einer vorhandenen Schüttlerhilfe problemlos möglich. Backenober- und Backenunterteil sowie das Stützprofil weisen werkseits bereits die notwendigen Bohrungen auf, während für das Setzen der Bohrungen in die Blechwand und die Bördelkante der Hordenstufe Bohrschablonen bereit gehalten werden.

Gegenstand der Erfindung ist ebenfalls ein mit einer beschriebenen Schüttlerhilfe ausgestatteter Hordenschüttler. Dieser weist nebeneinander liegende, mehrstufige Horden und an mindestens einer Kante und im Bereich einer Fallstufe angeordnete Schüttlerhilfen auf, die an der vorletzten und/oder drittletzten Fallstufe angeordnet sind.

Die Anordnung der Schüttlerhitfe an der vorletzten und/oder drittletzten Stufenkante hat sich als besonders vorteilhaft erwiesen, da in diesem Bereich des Schüttlers kaum noch Schüttlerarbeit geleistet wird. Dies liegt u. a. darin begründet, dass mit zunehmender Länge des Transportweges eine Verdichtung der Strohmatte erfolgt. Hier ist daher die Anordnung einer Schüttlerhilfe zur Auflockerung der Strohmatte und einer damit einhergehenden verbesserten Restkomabscheidung besonders wirkungsvoll. Die Auflockerung der Strohmatte wird dadurch bewirkt, dass die einseitig gehaltenen und dadurch oszillierenden Zinken der Schüttlerhilfe in die aufliegende verdichtete Strohmatte eindringen und diese dabei auseinander reißen.

Zusätzlich zu der vorteilhaften Anordnung der Schüttlerhilfen im Bereich der vorletzten und/oder drittletzten Fallstufe einer Horde können darüber hinaus weitere Schüttlerhilfen im vorderen Bereich einer Horde angeordnet werden, so dass eine intensive Auflockerung des Gutstroms durchgehend gewährleistet ist.

Das Trägerblech bzw. der Trägerrahmen der Schüttelhilfe ist derart an der Stufenkante der Horde angeordnet, dass sich die Zinken zum einen in Längsrichtung der Horde erstrecken, zum anderen gegenüber der Förderebene der Horde, an deren Kante die Schüttelhilfe befestigt ist, um 15° bis 30° nach oben geneigt sind.

Die Befestigung des Trägerblechs wiederum erfolgt vorzugsweise über eine Schraubverbindung, wobei die Schrauben derart zu bemessen und anzuordnen sind, dass keine zu Verbiegungen führende Belastung der Hordenstufenkante erfolgt, an der die Schüttlerhilfe befestigt ist. Je nach Lage der am Trägerblech vorgesehenen Stützlaschen, -rahmen oder -leisten können auch diese einer Verbiegung der Stufenkante entgegenwirken.

Der Einsatz einer vorstehend beschriebenen Schüttlerhilfe oder eines entsprechend ausgestatteten Hordenschüttlers führt nicht nur zu einer Verringerung von Schüttlerverlusten und verhindert damit den unerwünschten Austrag an Emtegutresten, sondern er ermöglicht zudem eine Erhöhung der Emtegeschwindigkeit bzw. der Durchsatzleistung des Mähdreschers.

Verschiedene Ausführungsbeispiele der Erfindung sind in den folgenden Zeichnungen dargestellt. Es zeigen:
- Fig. 1: eine schematische Schnittansicht längs durch einen Mähdrescher;
- Fig. 2: eine perspektivische Darstellung einer Schüttlerhilfe;
- Fig. 3a-b: zwei Ansichten einer weiteren Ausführungsform, bei der Trägerblech und Abstützrahmen einstückig ausgebildet sind;
- Fig. 4a-b: zwei Ansichten einer weiteren Ausführungsform, bei der ein mehrfach abgewinkeltes Profil das Trägerblech bildet;
- Fig. 5a-b: zwei Ansichten einer Ausführungsform gemäß Fig. 4a-b, jedoch mit abgewinkeltem Zinkenstab;
- Fig. 6a-b: zwei Ansichten einer Befestigungslasche ausgebildet als Zinkenbett;
- Fig. 7a-b: zwei Ansichten einer Befestigungslasche ausgebildet als Druckblech;
- Fig. 8a-e: Schnitte. Ansichten sowie eine perspektivische Darstellung eines als Leiste ausgebildeten Trägerrahmens;
- Fig. 9a-c: jeweils eine perspektivische Darstellung einer Schüttlerhilfe an einer Horde, bei der die Zinken zwischen zwei Backen geklemmt sind, ohne Abstützelement und mit Abstützelement;
- Fig. 10: eine perspektivische Explosionsansicht der Schüttlerhilfe gemäß Fig. 9c;
- Fig. 11: Schnittansicht durch eine Schüttlerhilfe mit zwei Backen und drei Zinken;
- Fig. 12a-b: zwei weitere Ansichten der Schüttlerhilfe nach Fig. 11;
- Fig. 13a-c: verschiedene Ansichten eines L-förmigen Stützprofils;
- Fig. 14: perspektivische Ansicht des Stützprofils nach Fig. 13.

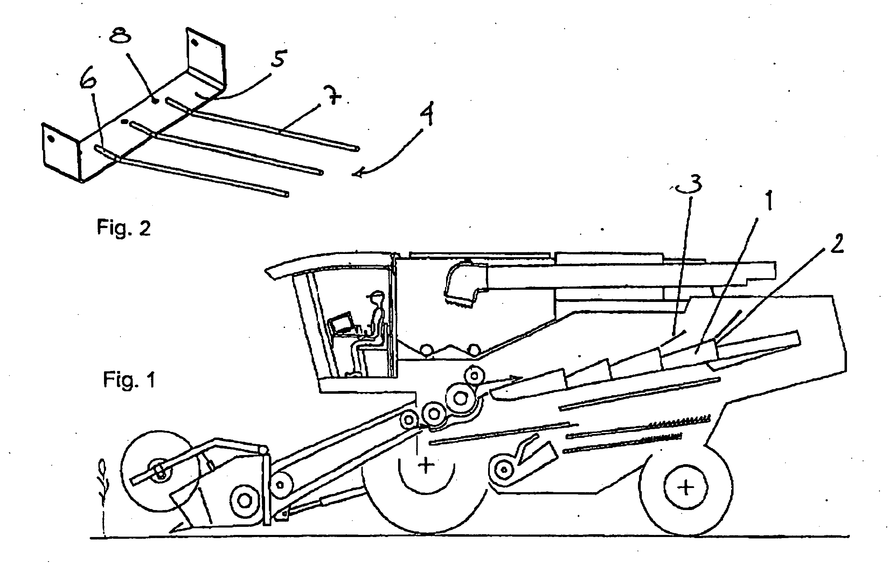

Die schematische Schnittansicht der Fig. 1 zeigt die für den Transport und Verarbeitung des Ernteguts erforderlichen Einrichtungen eines Mähdreschers vom Schnitt des Ernteguts bis zum Auswurf. Die Gutselektion erfolgt vornehmlich beim Transport des Gutstroms über den Hordenschüttler, der aus nebeneinander liegenden, mehrstufigen Horden 1 besteht, wobei der überwiegende Teil der Körner im vorderen Bereich einer Horde 1 abgeschieden wird.

Die im Schnitt dargestellte Horde 1 weist mehrere Fallstufen 2 auf, wobei an der Kante der vorletzten und drittletzten Fallstufe 2 eine Schüttlerhilfe 3 gemäß Fig. 2 angeordnet ist. Die Schüttlerhilfe 3 erstreckt sich über die gesamte Kantenlänge der Fallstufe 2.

Wie der Fig. 2 zu entnehmen ist, weist die Schüttlerhilfe 3 drei Zinken 4 auf, die an einem Trägerblech 5 angeschweißt sind. Jeder der Zinken 4 besitzt einen kurzen Abschnitt 6, der in Anlage mit dem Trägerblech 5 gebracht ist, und einen längeren Abschnitt 7, der über die Kante des Trägerbleches 5 hinausragt und gegenüber der Trägerblechebene eine Neigung von 15° aufweist. An dem Trägerblech 5 sind Bohrungen 8 zur Aufnahme von Schrauben vorgesehen, mittels derer das Trägerblech 5 an der Stufenkante der Horde 1 derart verschraubt wird, dass die Neigung der längeren Zinkenabschnitte 7 gegenüber der Förderebene der Horde ebenfalls 15° beträgt, wobei die Zinkenenden von der Förderebene weg nach oben weisen.

Die Abmessungen des Trägerblechs 5 sowie die Anordnung der Bohrungen 8 sind vorliegend auf die Ausbildung der Stufenkante mit einer überstehenden Bördelnaht abgestimmt. Die Bördelnaht ist die Verbindungsstelle zwischen einem oben liegenden Slebrost und einer darunter angeordneten Rücklaufwanne, in der das abgeschiedene Korn aufgefangen wird. Das Trägerblech 5 wird vollständig unter die Bördelnaht geschoben und dann verschraubt. Zur Auffüllung des Hohlraums zwischen den Zinken 4 werden Unterlegscheiben eingesetzt, mittels derer sich das Trägerblech 5 zusätzlich gegenüber der Bördelnaht abstützen kann (nicht dargestellt).

Je nach Ausbildung der Stufenkante einer Horde, ob beispielsweise mit überstehender oder bündiger, mit kantiger oder gerundeter Bördelnaht, kann die Befestigung des Trägerblechs bzw. des Trägerrahmens auch auf andere Weise erfolgen. Entscheidend ist, dass eine stabile Befestigung erreicht wird, um den voreingestellten Anstellwinkel der Zinken 4 dauerhaft zu gewährleisten.

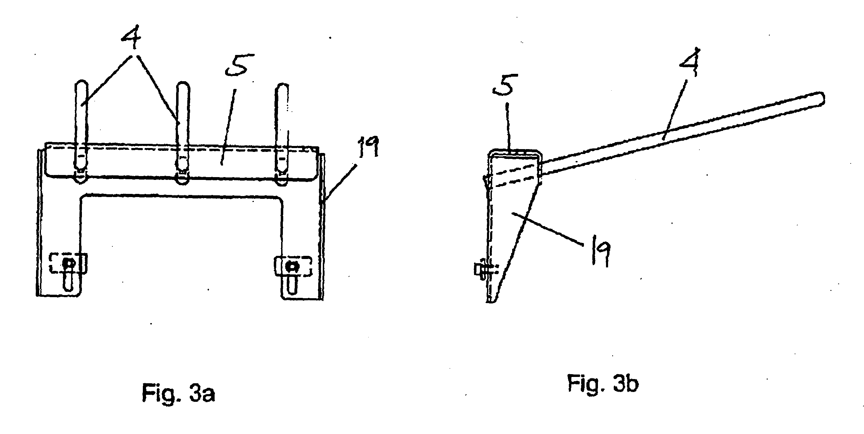

Eine alternative Ausführungsform zeigen Figuren 3a-b. Das Trägerblech 5 weist rückseitig eine senkrechte Fläche zur Verschraubung mit der Vertikalfläche einer Horde 1 auf, von der seitlich zwei Stützlaschen 19 abgekantet sind. Die senkrechte Fläche ist oberseitig erneut zweifach abgekantet, so dass ein L-förmiges Profil entsteht, dessen waagerechter Schenkel auf den Stützlaschen 19 aufliegt und dessen kurzer senkrechter Schenkel Bohrungen zur Aufnahme der Zinken 4 aufweist. Die rückseitige Fläche des Trägerbleches 5 weist vorliegend ebenfalls Bohrungen auf, die derart angeordnet sind, dass ein Zinken 4, der durch die Bohrungen des kurzen Schenkels des L-förmigen Profils und durch die Bohrung der senkrechten Rückwand geführt wird, den gewünschten Anstellwinkel erhält.

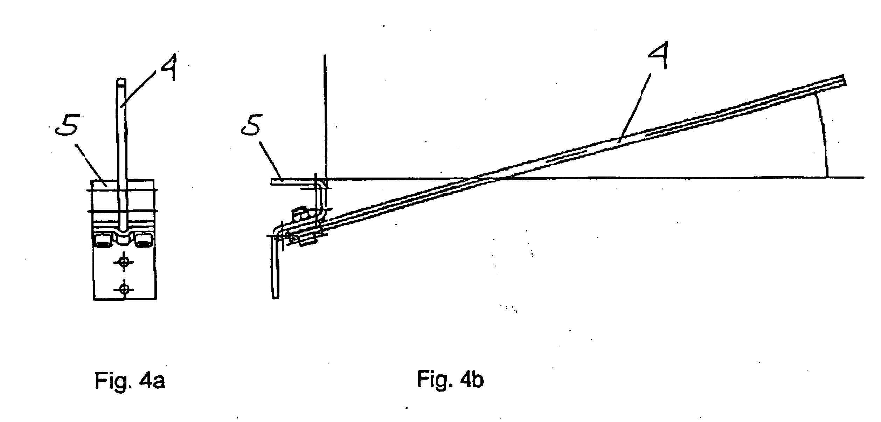

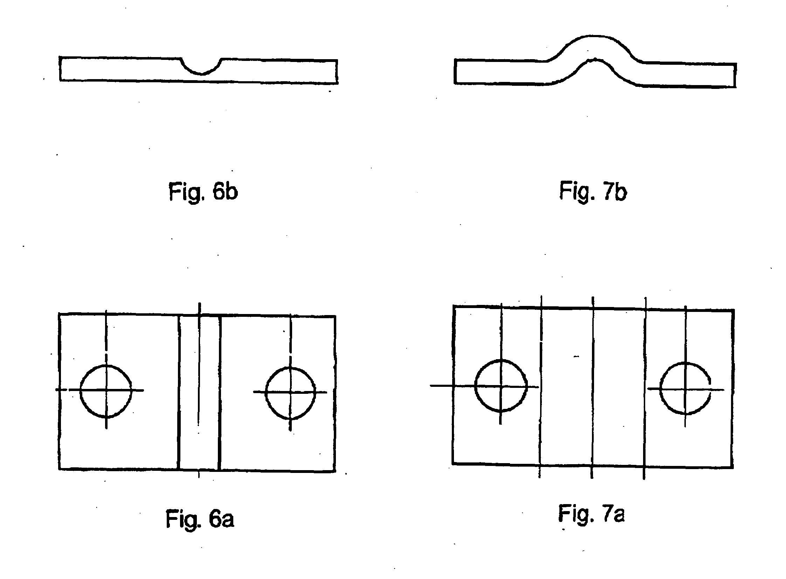

Eine weitere Ausführungsform ist in den Figuren 4a-b dargestellt. Das Trägerblech 5 besteht hier aus einem mehrfach abgewinkelten Profil. Es kann der Aufnahme mehrerer Zinken 4 oder der Aufnahme eines einzelnen Zinken 4 dienen, wie vorliegend dargestellt. Der senkrechte untere Schenkel des Profils wird zur Befestigung an der Horde in Anlage mit der Vertikalfläche der Stufenkante gebracht und mit dieser verschraubt. Der obere waagerechte Schenkel wird in Anlage mit der Bördelkante gebracht und ebenfalls über wenigstens eine Schraube fixiert. An der Unterseite des schräg abgewinkelten Mittelbereichs des Profils wird der Zinken 4 befestigt. Hierzu sind zweiteilige Befestigungslaschen vorgesehen, die aus einem Zinkenbett (siehe Fig. 6a-b) und einem Druckblech (siehe Fig. 7a-b) bestehen. Das Zinkenbett weist eine halbkreisförmige Ausnehmung auf, in die der Zinken 4 eingelegt wird. Weiterhin sind seitlich davon wenigstens zwei Bohrungen vorgesehen. Das Druckblech besitzt dieselben Außenabmessungen wie das Zinkenbett und weist ebenfalls eine halbkreisförmige Ausnehmung oder eine im Wesentlichen halbkreisförmige Auswölbung entsprechend der Darstellung in Fig. 7b auf. Ferner sind auch hier seitlich davon wenigstens zwei Bohrungen angeordnet. Nachdem der Zinken 4 in das Zinkenbett eingelegt wurde Wird darüber das Druckblech derart angeordnet, dass der Zinken 4 in der halbkreisförmigen Ausnehmung oder der Auswölbung zu liegen kommt und die Bohrungen übereinander liegen. Mittels durch die Bohrungen geführten Schrauben kann das Laschenpaar einschließlich Zinken dann unter den schräg verlaufenden Profilabschnitt des mehrfach abgewinkelten Trägerblechs gesetzt und dort verschraubt werden.

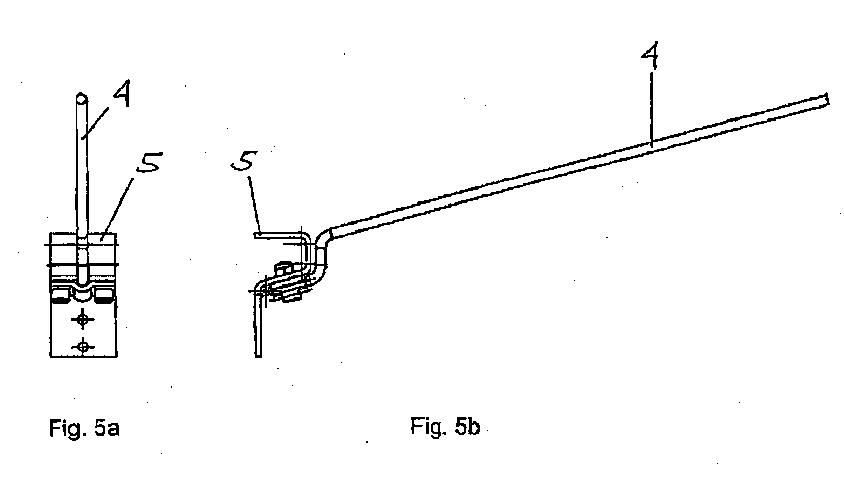

Eine Weiterbildung ist den Fig. 5a-b zu entnehmen. Das Trägerprofil entspricht dem der Ausführungsform gemäß der Fig. 4a-b, auch die Befestigung mittels eines Laschenpaares ist gleich. Im Unterschied zur vorstehend beschriebenen Ausführung ist der zur Befestigung vorgesehene Endabschnitt des Zinkens 4 jedoch ebenfalls abgewinkelt. Auf diese Weise kann der Höhenunterschied zur Stufenkante, der sich dadurch ergibt, dass der Zinken 4 unter das Profil gesetzt wird, überwunden werden.

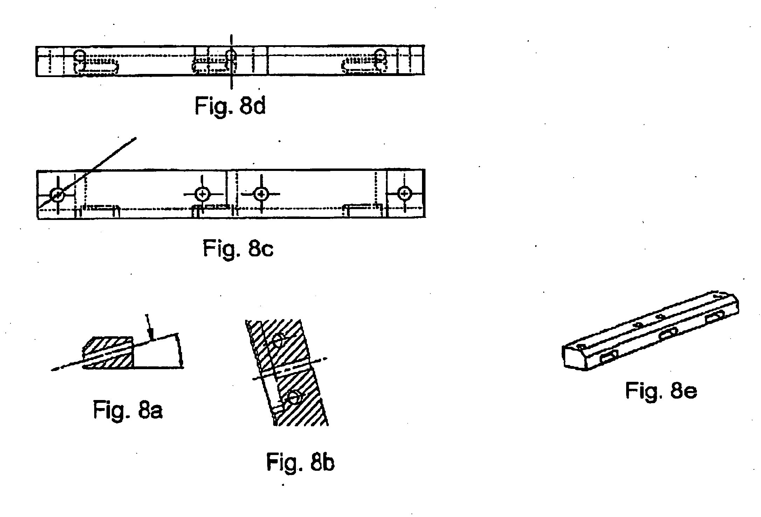

Eine weitere alternative Ausführungsform eines Trägerblechs oder Trägerrahmens zeigen die Figuren 8a-e. Es bzw. er ist einstückig ausgebildet und besitzt die Form einer Leiste. Schräg durch die Leiste geführte Bohrungen dienen der Aufnahme der Zinken 4.

Die Schräglage der Bohrungen entspricht dem gewünschten Anstellwinkel der Zinken (siehe Fig. 8a). Darüber hinaus kann die Leiste rückseitig seitlich geführte Ausnehmungen besitzen, die in Verbindung mit den Bohrungen stehen und der Aufnahme entsprechend abgewinkelter Endabschnitte eines Zinkens dienen. Die Zinken werden dann von der Rückseite der Leiste durch die Bohrung geschoben bis die abgewinkelten Enden in den seitlich geführten Ausnehmungen zu liegen kommen. Die Zinken sind somit gegen Herausrutschen gesichert.

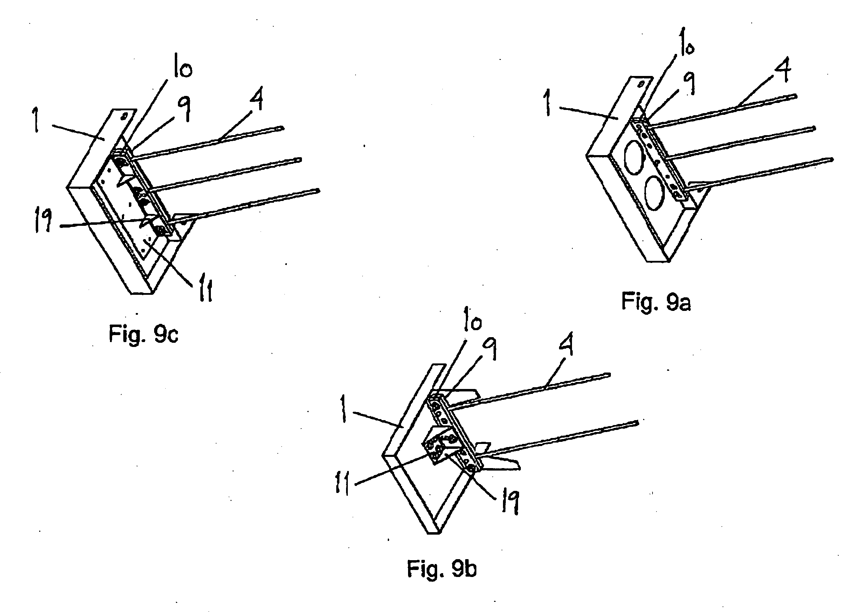

Eine besonders stabile Verbindung gewährleistet eine weitere alternative Ausführungsform einer Schüttlerhilfe gemäß der Fig. 9a-c. Hier besteht der die Zinken 4 aufnehmende Trägerrahmen aus zwei Backen, die jeweils ein Rahmenoberteil 9 und ein Rahmenunterteil 10 bilden, zwischen denen mindestens ein Zinken 4 klemmend gehalten wird. Die Darstellungen zeigen ebenfalls die Befestigung der jeweiligen Schüttlerhilfe an einer Horde sowie verschiedene zusätzliche Abstützelemente (Fig. 9b-c). Das Ausführungsbeispiel entsprechend Fig. 9c wird anhand der nachfolgenden Darstellungen näher erläutert.

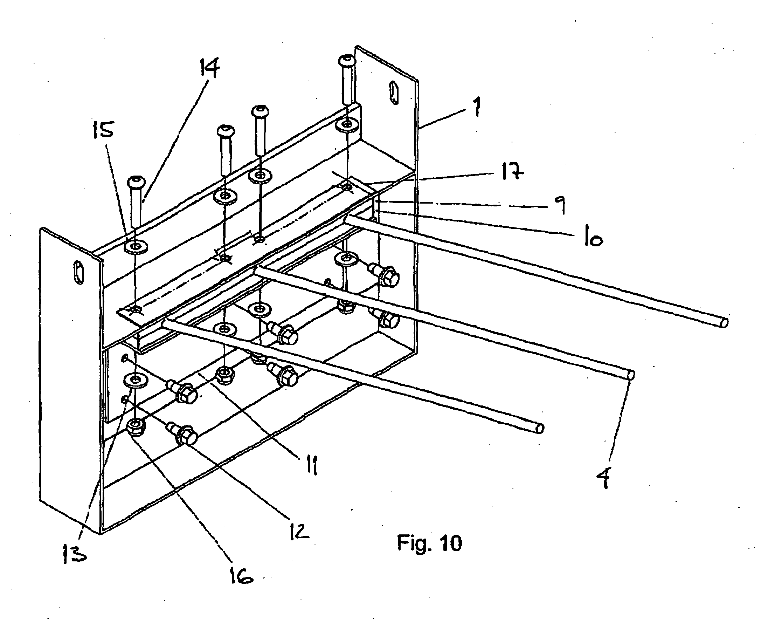

Fig. 10 zeigt die Anordnung einer entsprechenden Schüttlerhilfe 3 an einer Horde 1. Unterhalb der beiden Tägerrahmenteile 9,10 ist ein L-förmiges Stützprofil 11 angeordnet, das mittels sechs Schrauben 12 einschließlich einer entsprechenden Zahl an Sperrkantscheiben 13 mit der Vertikalwand der Horde 1 verschraubt wird. Mittels weiterer Schrauben 14 einschließlich Sperrkantscheiben 15 und Muttern 16 werden beide Teile 9, 10 des Trägerrahmens mit dem Stützprofil 11 und der Horde 1 verbunden. Bei einer Bördelkantenausbildung entsprechend der Darstellung in Fig. 10 ist dies möglich. Hierzu wird die Schüttlerhilfe direkt unterhalb der Bördelkante angeordnet und mittels einer Bohrzchablone 17 die entsprechenden Bohrungen in die Bördelkante gesetzt. Danach können die Schrauben 14 derart eingesetzt werden, dass sie durch die Bördelkante, durch das Ober und Unterteil 9,10 des Trägerrahmens und durch das Stützprofil 11 führen.

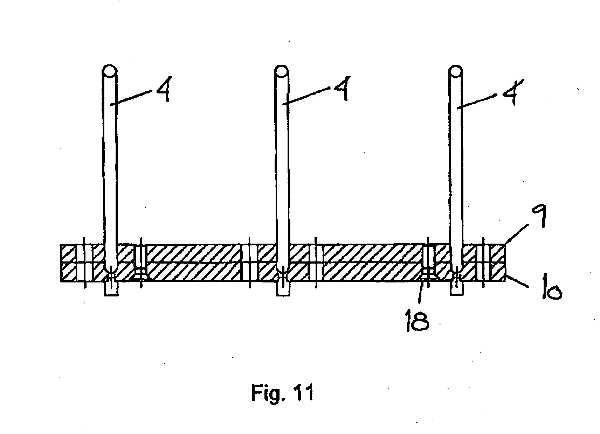

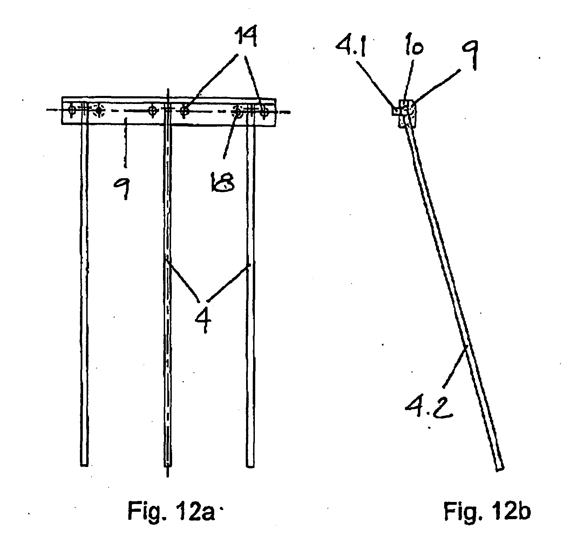

Fig. 11 und 12 zeigen dieselbe Schüttlerhilfe vor der Montage an einer Horde. Drei Zinken 4 mit jeweils einem abgewinkelten Endbereich 4.1 sind derart zwischen Ober- und Unterteil 9, 10 des Trägerrahmens angeordnet, dass sie einerseits klemmend gehalten werden, andererseits der abgewinkelte Endbereich 4.1 eines jeden Zinken 4 durch eine Bohrung des Unterteils 10 hindurchgeführt ist, so dass die Zinken 4 auch gegen Herausrutschen gesichert sind. Ober- und Unterteil 9, 10 des Trägerrahmens sind mittels Schrauben 18 miteinander verschraubt. Während Fig. 12a eine Draufsicht auf die Schüttlerhilfe zeigt, ist Fig. 12b deutlich die Ausgestaltung eines Zinkens 4 mit einem abgewinkelten Endbereich 4.1 zu entnehmen. Der abgewinkelte Endbereich 4.1 schließt hier mit den in einem Winkel von 15° geneigt zur Trägerrahmenebene angeordneten Zinkenteil 4.2 einen Winkel von 105° ein.

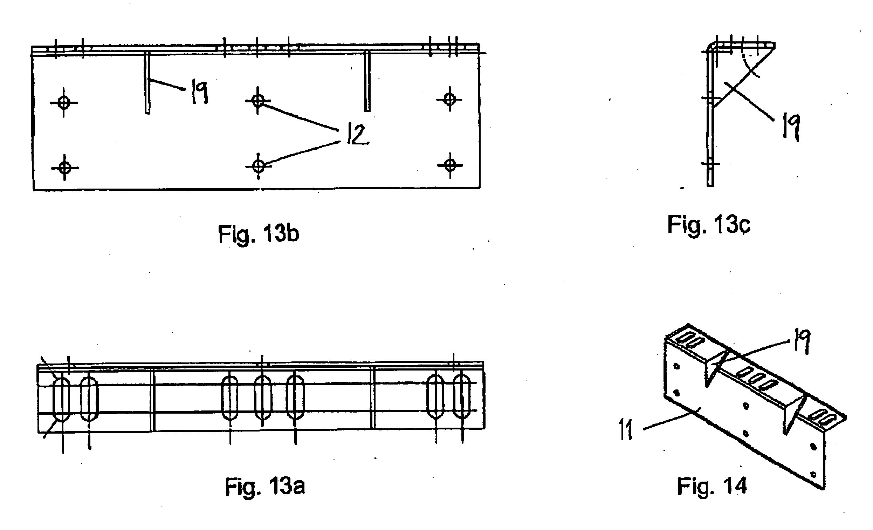

In den Fig. 13a-c sind verschiedene Ansichten eines L-förmigen Stützprofils 11 dargestellt. In der Drauf-, Längs- und Seitenansicht sind sämtliche werkseits vorgerichtete Bohrungen zur Aufnahme der Schrauben 12 und 14 zu erkennen. Die Bohrungen auf der Oberseite des Stützprofils 11, das bei der Montage an einer Horde 1 in Anlage mit dem Unterteil 10 des Trägerrahmens gebracht wird, sind die Bohrungen als Langlöcher ausgeführt. Dies vereinfacht die Montage. Weiterhin sind den Fig. 13a-c und 14 Stützlaschen 19 zu entnehmen, die zur Aussteifung des Stützprofils 11 dienen, denn die Hebelkräfte der schwingenden Zinken 4 werden über die Backen 9, 10 auch auf das Stützprofil 11 übertragen.

Nicht dargestellt aber ebenfalls Gegenstand der Erfindung sind Kombinationen der unterschiedlichen Ausführungsformen, beispielsweise indem die aus zwei Backen bestehende Klemmhalterung der Zinken entsprechend Fig. 11 unter ein Trägerblech gesetzt wird, das zugleich als Abstützrahmen ausgebildet ist und seitliche Stützlaschen entsprechend Fig. 3 aufweist.

## Patentansprüche

1. Schüttlerhilfe (3) für einen Schüttler-Mähdrescher mit nebeneinander liegenden, mehrstufigen Horden und mit einem an der Stufenkante einer Horde stabil befestigten Trägerblech (5) oder Trägerrahmen, an dem ein Zinken (4) angeordnet ist,
**dadurch gekennzeichnet, dass**
mindestens ein, vorzugsweise mehrere Zinken (4) starr am Trägerblech (5) oder Trägerrahmen befestigt sind und dass der oder die Zinken ausschließlich sich in einer vertikalen Ebene erstreckend angeordnet sind und eine über das Trägerblech bzw. den Trägerrahmen überstehende Länge von mindestens 20 cm, vorzugsweise 30 bis 45 cm besitzen und gegenüber der horizontal liegenden Trägerblech- oder Trägerrahmenebene um 15° bis 30° nach oben geneigt sind.

2. Schüttlerhilfe nach Anspruch 1, **dadurch gekennzeichnet, dass** mehrere Zinken (4) vorgesehen sind, wobei zwei benachbarte Zinken einen Abstand von mindestens 5 cm, vorzugsweise 7 bis 10 cm, haben.

3. Schüttlerhilfe nach Anspruch 1 oder 2, **dadurch gekennzeichnet, dass** der Zinkendurchmesser mindestens 5 mm beträgt.

4. Schüttlerhilfe nach einem der Ansprüche 1 bis 3, **dadurch gekennzeichnet, dass** die Zinken (4) aus Federstahl bestehen.

5. Schüttlerhilfen nach einem der Ansprüche 1 bis 4, **dadurch gekennzeichnet, dass** die Zinken (4) an dem Trägerblech (5) bzw. Trägerrahmen mittels einer Löt- bzw. Schweiß-, Klemm-, Steck- oder Schraubverbindung befestigt sind.

6. Schüttlerhilfe nach einem der Ansprüche 1 bis 5, **dadurch gekennzeichnet, dass** das Trägerblech (5) bzw. der Trägerrahmen ganz oder teilweise aus einem U-Profil oder einem L-Profil, vorzugsweise aus einem mehrfach abgewinkelten Profil oder einer Leiste, besteht, wobei vorzugsweise an dem Trägerblech bzw. Trägerrahmen zusätzlich mindestens eine Stützlasche (19) angeordnet ist.

7. Schüttlerhilfe nach einem der Ansprüche 1 bis 5, **dadurch gekennzeichnet, dass** der Trägerrahmen aus einem Rahmenoberteil (9) und einem Rahmenunterteil (10) zur klemmenden Befestigung der Zinken (4) besteht, wobei Rahmenoberteil und Rahmenunterteil miteinander verschraubbar sind.

8. Schüttlerhilfe nach Anspruch 7, **dadurch gekennzeichnet, dass** der aus Ober- und Unterteil (9, 10) bestehende Trägerrahmen zusätzlich mit einem Stützprofil (11) verschraubbar ist, wobei das Stützprofil vorzugsweise L-förmig ist und Stützlaschen (19) zur Aussteifung aufweist.

9. Hordenschüttler eines Schüttler-Mähdreschers mit nebeneinander liegenden, mehrstufigen Horden (1) und an mindestens einer Kante und im Bereich einer Fallstufe (2) angeordneten Schüttlerhilfen (3) nach einem der vorhergehenden Ansprüche, **dadurch gekennzeichnet, dass** die Schüttlerhilfen (3) an der vorletzten und/oder drittletzten Fallstufe (2) angeordnet sind.

10. Hordenschüttler nach Anspruch 9, **dadurch gekennzeichnet, dass** der oder die Zinken (4) der Schüttlerhilfen (3) sich in Längsrichtung der Horde (1) erstrecken und gegenüber der Förderebene der Horde (1), an deren Kante die Schüttelhilfe befestigt ist, um 15° bis 30° nach oben geneigt sind.

## Claims

1. Shaker aid (3) for a shaker-type combine harvester with multistage hurdles lying next to one another and with a support plate (5) or support frame which is fastened in a stable manner to the stepped edge of a hurdle and on which a tine (4) is arranged, **characterized in that** at least one tine (4), preferably more than one tine (4), is/are fastened rigidly to the support plate (5) or support frame, and **in that** the tine or the tines is or are arranged exclusively extending in a vertical plane and has or have a length of at least 20 cm, preferably 30 to 45 cm, protruding over the support plate or the support frame and is or are inclined upwards by 15° to 30° in relation to the horizontally located plane of the support plate or support frame.

2. Shaker aid according to Claim 1, **characterized in that** more than one tine (4) is provided, with two adjacent tines being at a distance of at least 5 cm, preferably 7 to 10 cm.

3. Shaker aid according to Claim 1 or 2, **characterized in that** the tine diameter is at least 5 mm.

4. Shaker aid according to one of Claims 1 to 3, **characterized in that** the tines (4) are composed of spring steel.

5. Shaker aids according to one of Claims 1 to 4, **characterized in that** the tines (4) are fastened to the support plate (5) or support frame by means of a soldering or welding, clamping, plug-in or screw connection.

6. Shaker aid according to one of Claims 1 to 5, **characterized in that** the support plate (5) or the support frame entirely or partially comprises a U profile or an L profile, preferably a multi-angled profile or a strip, with at least one supporting tab (19) preferably additionally being arranged on the support plate or support frame.

7. Shaker aid according to one of Claims 1 to 5, **characterized in that** the support frame comprises an upper frame part (9) and a lower frame part (10) for the clamping fastening of the tines (4), the upper frame part and lower frame part being screwable to each other.

8. Shaker aid according to Claim 7, **characterized in that** the support frame which comprises the upper and lower parts (9, 10) can additionally be screwed to a supporting profile (11), the supporting profile preferably being L-shaped and having supporting tabs (19) for reinforcement purposes.

9. Hurdle shaker of a shaker-type combine harvester with multi-stage hurdles (1) lying next to one another and shaker aids (3) arranged on at least one edge and in the region of a dropping step (2), according to one of the preceding claims, **characterized in that** the shaker aids (3) are arranged on the penultimate and/or third-to-last dropping step (2).

10. Hurdle shaker according to Claim 9, **characterized in that** the tine or the tines (4) of the shaker aids (3) extend in the longitudinal direction of the hurdle (1) and are inclined upwards by 15° to 30° in relation to the conveying plane of the hurdle (1), to the edge of which the shaking aid is fastened.

## Revendications

1. Aide de secoueur (3) pour une moissonneuse-batteuse à secoueur comprenant des claies à gradins multiples situées les unes à côté des autres ainsi qu'une tôle de support (5) ou cadre de support qui est fixé(e) de manière solide sur l'arête de gradin d'une claie et sur laquelle (lequel) est disposé un fourchon (4), **caractérisée par le fait qu'**au moins un fourchon, de préférence plusieurs fourchons (4) sont fixés rigidement sur ladite tôle de support (5) ou le cadre de support et que le ou les fourchon(s) sont disposés de manière à s'étendre exclusivement dans un plan vertical et présentent une longueur dépassant la tôle de support ou bien le cadre de support de 20 cm au moins, de préférence de 30 à 45 cm, et sont inclinés de 15° à 30° vers le haut par rapport au plan horizontal de la tôle de support ou du cadre de support.

2. Aide de secoueur selon la revendication 1, **caractérisée par le fait que** plusieurs fourchons (4) sont prévus, deux fourchons voisins présentant une distance l'un de l'autre qui est d'au moins 5 cm, de préférence comprise entre 7 et 10 cm.

3. Aide de secoueur selon la revendication 1 ou 2, **caractérisée par le fait que** le diamètre de fourchon est d'au moins 5 mm.

4. Aide de secoueur selon l'une quelconque des revendications 1 à 3, **caractérisée par le fait que** lesdits fourchons (4) sont réalisés en acier à ressorts.

5. Aide de secoueur selon l'une quelconque des revendications 1 à 4, **caractérisée par le fait que** lesdits fourchons (4) sont fixés par brasage ou bien soudage, par serrage, par emboîtement ou par vissage sur la tôle de support (5) ou bien le cadre de support.

6. Aide de secoueur selon l'une quelconque des revendications 1 à 5, **caractérisée par le fait que** la tôle de support (5) ou bien le cadre de support est réalisé complètement ou en partie sous forme d'un profilé en U ou d'un profilé en L, de préférence sous forme d'un profilé coudé à plusieurs reprises ou d'une barre, de préférence en sus au moins une languette d'appui (19) étant disposée sur la tôle de support ou bien le cadre de support.

7. Aide de secoueur selon l'une quelconque des revendications 1 à 5, **caractérisée par le fait que** ledit cadre de support est constitué par une partie supérieure de cadre (9) et par une partie inférieure de cadre (10) pour la fixation par serrage des fourchons (4), les parties supérieure et inférieure de cadre pouvant être vissées l'une avec l'autre.

8. Aide de secoueur selon la revendication 7, **caractérisée par le fait que** ledit cadre de support se composant des parties supérieure et inférieure (9, 10) peut être vissé en sus avec un profilé d'appui (11), ledit profilé d'appui étant réalisé de préférence en L et présentant des languettes d'appui (19) destinées à la rigidification.

9. Secoueur à claies d'une moissonneuse-batteuse à secoueur comprenant des claies (1) à gradins multiples situées les unes à côté des autres ainsi que des aides de secoueur (3) selon l'une quelconque des revendications précédentes, disposées sur au moins une arête et au niveau d'un gradin de chute (2), **caractérisé par le fait que** les aides de secoueur (3) sont disposées, à compter de la fin, sur le deuxième et/ou le troisième gradin de chute (2).

10. Secoueur à claies selon la revendication 9, **caractérisé par le fait que** le ou les fourchons (4) des aides de secoueur (3) s'étendent dans la direction longitudinale de la claie (1) et sont inclinés de 15° à 30° vers le haut par rapport au plan de transport de la claie (1) sur l'arête de laquelle ladite aide de secoueur est fixée.
